# EUROPEAN PATENT SPECIFICATION

(11) **EP 2 043 832 B1**
(45) Date of publication and mention of the grant of the patent: **03.10.2012**
(21) Application number: 07787094.7
(22) Date of filing: 05.07.2007
(51) Int. Cl.: B29C 33/50

(54) **METHOD FOR PRODUCING A FIBRE COMPOSITE COMPONENT USING A MOULDING CORE, AND SAID MOULDING CORE**
VERFAHREN ZUR HERSTELLUNG EINER FASERVERBUNDKOMPONENTE UNTER VERWENDUNG EINES FORMKERNS UND FORMKERN
PROCÉDÉ DE FABRICATION D'UN COMPOSANT DE COMPOSITE FIBREUX À L'AIDE D'UN NOYAU DE MOULAGE, ET LEDIT NOYAU DE MOULAGE

(30) Priority: 06.07.2006 DE 102006031323; 06.07.2006 US 818930 P
(43) Date of publication of application: 08.04.2009
(73) Proprietor: Airbus Operations GmbH, 21129 Hamburg (DE)
(72) Inventor: JACOB, Torben, 21643 Beckdorf (DE); PIEPENBROCK, Joachim, 21614 Buxtehude (DE)
(74) Representative: Isarpatent
(86) International application number: PCT/EP2007/056799
(87) International publication number: WO 2008/003740

(56) References cited:
- EP-A2- 0 491 650
- WO-A-95/14563
- WO-A-2005/105402
- FR-A1- 2 745 745
- GB-A- 2 292 332
- US-A- 5 262 121

## Description

The present invention relates to a method for producing a fibre composite component, in particular for aerospace, to a moulding core for producing such a fibre composite component and to a fibre composite component with at least one stringer which is produced by means of such a moulding core and/or such a method.

Although it can be applied to any desired fibre composite components, the present invention and the problems on which it is based are explained in more detail below with reference to two-dimensional stringer-stiffened carbon fibre reinforced plastic (CRP) components, for example skin shells of an aircraft.

It is generally known to stiffen CRP skin shells with CRP stringers in order to withstand the high loads in the aircraft sector with the lowest possible additional weight. In this respect, a distinction is made essentially between two types of stringers: T and Ω stringers.

The cross section of T stringers is made up of a base and a stem. The base forms the connecting surface with respect to the skin shell. The use of skin shells stiffened with T stringers is widespread in aircraft construction.

Ω stringers have something like a hat profile, its ends being connected to the skin shell. Ω stringers may either be adhesively attached in the cured state to the likewise cured shell, or be cured wet-in-wet at the same time as the shell. The latter is desired, because it is more favourable from technical aspects of the process. However, supporting or moulding cores are necessary for the wet-in-wet production of skin shells stiffened with Ω stringers, in order to fix and support the dimensionally unstable semifinished fibre products in the desired Ω shape during the production process. Skin shells with Ω stringers have the advantage over T stringers that they allow better infiltration during an infusion process for introducing a matrix, for example an epoxy resin, into the semifinished fibre products. Infusion processes can be inexpensive in comparison with other known methods for producing fibre composite components, such as the prepreg process for example, because this allows the use of lower-cost semifinished fibre products.

However, there is the problem with the production of Ω stringers that the material used at present for the supporting or moulding core is cost-intensive and can only be removed with difficulty after the forming of the Ω stringers, with the result that the material remaining in the stringers contributes adversely to the overall weight of the aircraft.

Widely used, for example for the injection moulding of thermoplastics, is a fusible core technique, in which the production of a component is performed by injecting plastic around a lost moulding core of a low-melting alloy, which is formed from a eutectic alloy of certain metals. After the plastic has been injected, the lost moulding core is melted out by induction heating or in a heated bath, after which the finished component is washed. However, this technique may have the disadvantage that, because of its toxicity, the eutectic low-melting alloy requires laborious treatment and safety measures.

Document US 5,262,121 A describes a method of making an elastomeric mandrel for use in formation of parts from composite materials. The method of making includes providing a separable mould with an interior chamber shaped to provide a desired exterior mandrel size and shape; applying uncured elastomeric material to surfaces of the interior chamber of separated parts of the mould; joining the elastomeric material by assembling the mould parts prior to cure such that the material joins at seams and allowing the elastomeric material to cure into a shape of the desired flexible mandrel. The mandrel is provided with a fill opening such that it is fillable with a particulate solid media and evacuable to compact the media. A method of using a flexible mandrel is also described, including the steps of providing a hollow elastomeric mandrel with a predetermined exterior size and shape, a fill opening, and an evacuation port and providing a separable mould having an interior cavity surface sized and shaped to correspond to a desired exterior size and shape of the mandrel in use. The mandrel is placed into the mould and an external vacuum is provided within the mould to draw the mandrel snugly against the moulds interior cavity surface. The mandrel is then filled with a particular solid media through the fill opening and an internal vacuum is provided within the mandrel through the evacuation port to compact said media into a substantially rigid form. The external vacuum is then released while maintaining the internal vacuum and the mandrel is removed from the mould for use.

Document FR 2 745 745 A1 describes a method to manufacture a composite component having a dense or airtight cavity coated with a surface protection. A mandrel comprising a flexible bladder filled with an internal rigid material, e.g. sand or a multiple material, for example a wax, having a melting temperature below a curing temperature of a resin of the composite component. Said bladder is coated with a protective layer providing density or tightness. Then said bladder filled with said internal material and coated with said protective layer is heated up to a temperature lower than the melting temperature of the wax to cure the protective layer. After that, prepregs are wound around the coated mandrel, and said assembly is put into a mould. In a further step, the internal material of said bladder is removed, e.g. by melting the wax using a temperature lower than a curing temperature of the resin of the prepregs. Then the bladder is set under pressure to press the protective layer against the prepegs of the composite component. Subsequently the resin is cured at its curing temperature.

Against this background, the present invention is based on the object of providing a lower-cost and lighter fibre composite component, in particular for aerospace.

According to the invention, this object is achieved by a method with the features of Patent Claim 1.

Accordingly, a method for producing a fibre composite component, in particular for aerospace, is provided, comprising the following method steps:
forming a moulding core from a core material with a predetermined narrow melting range in a moulding tool to establish an outer geometry of the moulding core, the core material of the moulding core being enclosed in a core sleeve, the sleeve being a flexible tube that can be closed at both ends, the tube being provided with at least two tube portions, each of which has at least the internal volume of at least one moulded portion of the fibre composite component to be produced, and one of the two tube portions being provided for receiving the moulding core and the other of the two tube portions being provided as a reservoir for receiving molten core material of the moulding core; at least partly laying at least one semifinished fibre product on the moulding core that is formed, for the shaping of the at least one moulded portion of the fibre composite component to be produced; and multistage exposure of at least the moulded portion to heat and/or pressure to produce the fibre composite component, wherein the moulded portion is pre-cured at a temperature below the melting temperature of the core material, and wherein a melting-out of the core material and a curing of the fibre composit component take place in parallel within one temperature step.

Also described but not part of the present invention is a moulding core for producing a fibre composite component, in particular a stringer on a base part, comprising a core material of plastic that has a defined narrow melting range.

Also described but not part of the present invention is a fibre composite component with at least one stringer, in particular for aerospace, which is produced by means of the moulding core according to the invention and/or the method according to the invention.

Consequently, the present invention has the advantage over the approaches mentioned at the beginning that the fibre composite component can be produced by means of a lower-cost moulding core. Instead of an expensive conventional core material, a lower-cost plastic can be advantageously used. A further advantage that is obtained is that this plastic is reusable.

Advantageous refinements and improvements of the present invention can be found in the subclaims.

The core material of the moulding core is enclosed in a core sleeve. The core sleeve is formed as a flexible tube that can be closed at both ends. The tube is in this case formed in such a way that it has at least two portions, each of which has at least the internal volume of the at least one moulded portion of the fibre composite component to be produced. In a first of the at least two portions of the flexible tube, the core material to be melted can consequently be arranged. The second of the at least two portions is introduced into the moulding tool for shaping, the molten core material being brought into the first portion, arranged in the moulding tool, by means of the force of its weight and/or some other force applied to it. This advantageously permits recycling of the core material, which can always remain in the flexible tube for the creation of the core and the later melting out and can be reused.

According to a further preferred exemplary embodiment of the invention, reinforcing means are arranged in the region of transitions, to be formed with sharp edges, of the outer geometry of the moulding core to be formed, inside and/or outside the core sleeve. These reinforcing means, in particular corner profile parts, have the advantage that they form the sharp edges and corners, it being possible for the moulding core to be provided in this region with easy-to-produce rounded portions.

A release layer, which reduces adhesive attachment of the semifinished fibre product and/or a matrix to the core sleeve, is preferably applied to the core sleeve. This facilitates removal of the core sleeve after the at least partial curing of the portion of the fibre composite component that is created by means of the moulding core.

Semifinished fibre products are to be understood as meaning woven or laid fabrics and fibre mats. These are provided with a matrix, for example an epoxy resin, and subsequently cured, for example in an autoclave.

According to a further preferred development of the invention, the moulding core is arranged on a base part comprising semifinished fibre composite products and/or is at least partially surrounded by semifinished fibre products to form at least one moulded portion of the fibre composite component. Consequently, base parts, for example skin shells, pressure domes, etc. with Ω stringers can be advantageously formed. As an alternative or in addition, separate fibre composite components, which are defined entirely in their form by the moulding core, can also be produced.

It is preferred that, in the multistage exposure to heat and/or pressure, a pre-curing stage is provided. This pre-curing serves for partially solidifying the fibre composite component below the melting temperature of the core material; to be precise to the extent that the fibre composite component would be adequately dimensionally stable even without the moulding core. This makes it possible for the moulding core to be removed from the mould even before the fibre composite component has completely cured right through. The pre-curing is performed to retain the at least one moulded portion of the fibre composite component to be produced without the moulding core by applying heat at a temperature below the melting temperature of the core material in a time period that can be fixed. As a result, it is advantageously possible to use a core material with a predetermined narrow melting range. The moulded portion is pre-cured in a certain time at a temperature below the melting point of the core material to the extent that it remains dimensionally stable without the moulding core. Consequently, complete removal of the moulding core is advantageously possible after this pre-curing.

After that, melting out of the core material to remove the same is performed in a melting-out stage by exposure to heat at a second temperature, above the melting temperature of the core material. For this purpose, the operation of removing the core material can again be advantageously made possible by the force of its weight or some other force applied to the moulding core. The core sleeve or the flexible tube is then removed from the moulded portion, so that the complete moulding core is advantageously removed from the moulded portion. After that, curing of the pre-cured fibre composite component without the moulding core takes place in a curing stage. The temperature of the curing stage advantageously corresponds to that of the melting-out stage, so that the residual curing can take place in parallel, following on after the melting out, within one temperature step.

After the melting out, the core material can be put to further use. In the case of a core sleeve, the molten core material is suitably collected and can likewise be reused.

For example in the case of the production of a Ω stringer, the core sleeve is drawn out from it in the longitudinal direction of the stringer. Consequently, the core then no longer contributes to the overall weight of the aircraft.

According to a preferred development of the invention, the moulding core is formed with at least one undercut. This undercut preferably lies in the longitudinal direction of the moulding core. Consequently, stringers of variable cross section in their longitudinal direction can be produced by means of such a moulding core. It is also advantageous that the core sleeve or the flexible tube can be removed from the moulding core with an undercut.

The invention is explained in more detail below on the basis of the exemplary embodiments represented in the schematic figures of the drawing, in which:
- Figure 1: shows a schematic perspective view of a first exemplary embodiment of a fibre composite component during production as provided by a method according to the invention;
- Figure 2: shows a schematic sectional representation of a first moulding core according to the invention of the fibre composite component as shown in Figure 1;
- Figure 3: shows a schematic sectional representation of a second moulding core according to the invention of the fibre composite component as shown in Figure 1;
- Figure 4: shows a schematic perspective view of the fibre composite component as shown in Figure 1 during the removal of two different moulding cores as provided by the method according to the invention;
- Figure 5A: shows a schematic side view of the fibre composite component comprising a moulding core with a flexible tube as provided by the method according to the invention;
- Figure: 5B shows a schematic side view of the fibre composite component as shown in Figure 5A during the removal of the moulding core with the flexible tube as provided by the method according to the invention; and
- Figure 6: shows a diagram of curing cycles of a fibre composite component as provided by the method according to the invention in comparison with a conventional curing cycle.

In all the figures of the drawings, elements that are the same or functionally the same have in each case been provided with the same reference numerals, unless otherwise indicated.

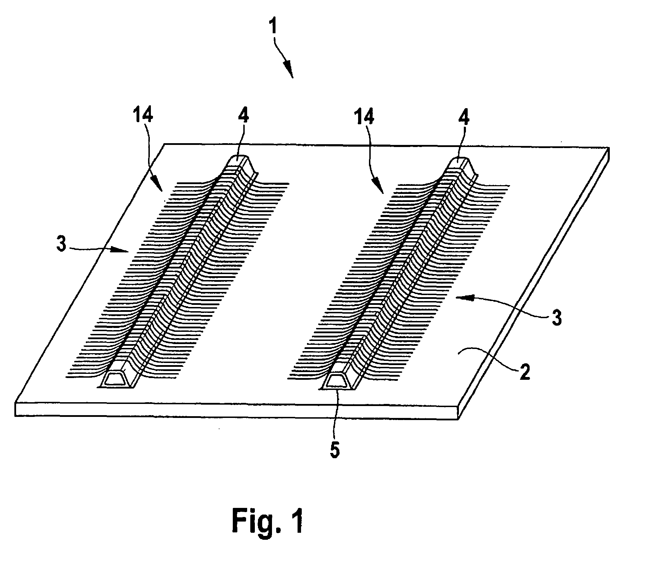

Figure 1 shows a schematic perspective view of a first exemplary embodiment of a fibre composite component 1 during production as provided by a method according to the invention.

This example has two moulding cores 4, the number not being restricted to two. The two moulding cores 4, the production of which is explained further below, are provided with an approximately trapezoidal cross section with their base 5 resting on a base component 2.

In a further step, semifinished fibre products 3 are laid on the moulding cores 4. The semifinished fibre products 3 thereby lie with a middle portion on the outer surface of the moulding cores 4 and with their ends on the base component 2, for example on the skin of an aircraft. As a result, two moulded portions 14 of the fibre composite component 1 are formed.

Various production methods may be used for producing the fibre composite component. What is known as the vacuum infusion process is preferably chosen here. However, the prepreg process can similarly be used here.

In a further step, the base component 2 is cured with the moulding cores 4 and the semifinished fibre product 3 in an autoclave under the effect of heat and pressure according to a curing cycle, which is described in detail further below, whereby the complete fibre composite component 1 is produced.

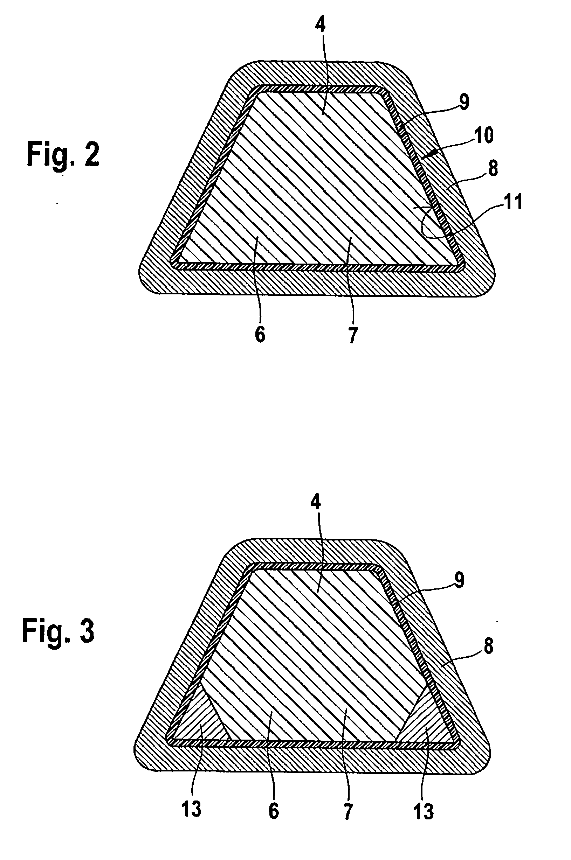

First, the creation of the moulding cores 4 is described on the basis of Figures 2 and 3.

Figure 2 shows a schematic sectional representation of a first moulding core 4 according to the invention of the fibre composite component 1 as shown in Figure 1 in a cross section.

The moulding core 4 includes a core material 7, which is introduced into a moulding tool 8 and in this tool is brought into the desired shape with a cross section 6 of the moulding core 4, here an approximately trapezoidal form. Preferably, the core material is melted and cast into the desired shape. In this example, the core material 7 is surrounded by a core sleeve 9, which completely encloses the moulding core 4 and is suitable for the method that is used for its production and its further working and processing, with regard to the process temperature and the process pressure. The core sleeve 9 comprises, for example, a polyamide or a PTFE plastic. It lies with its inner side 11 directly on the surfaces of the moulding core 4, in this example its outer side 10 being coated with a release layer (not shown), which may also comprise an additional sleeve. The release layer serves for the correct release of the moulding core 4 from the moulded portion 14 when it is removed from the mould.

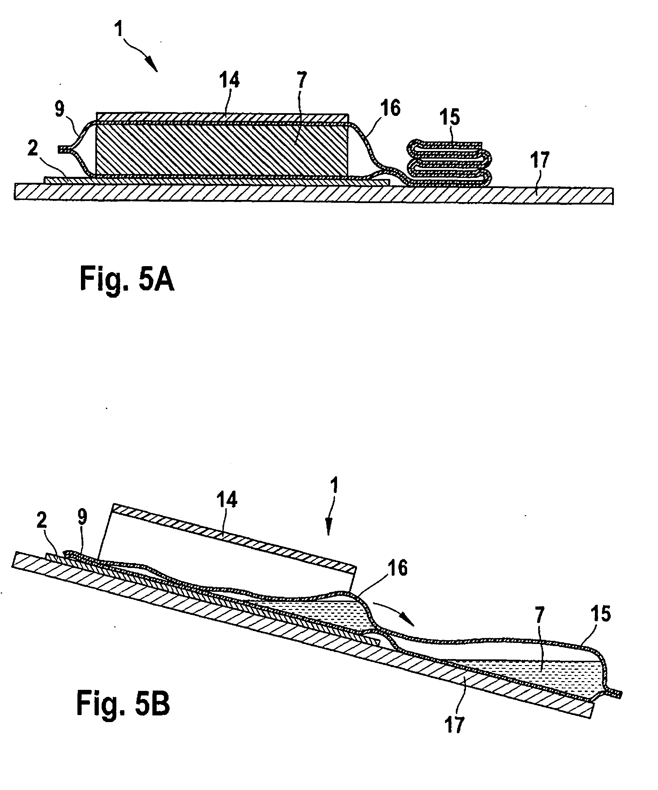

In a preferred embodiment, the core material 7 is a plastic with a defined narrow melting range, such as for example a polyamide PA12, PA11 or polypropylene PP GF30. Further plastics with a narrow melting range are ECTFE, PVDF, THV or POM-H. The melting range is discussed in detail with reference to Figure 5.

Figure 3 shows the moulding tool 8 with a moulding core 4 of a different cross section 6, in which the lower corner regions are replaced by reinforcing means 13, for example strips of metal or plastic. In this way, the moulding core 4 can be provided with particularly well-formed corner regions, by the reinforcing means 13 being fabricated in a separate tool.

The moulding cores 4 created in this way are removed from the moulding tool 8 and applied to the base component 2 in the way described above.

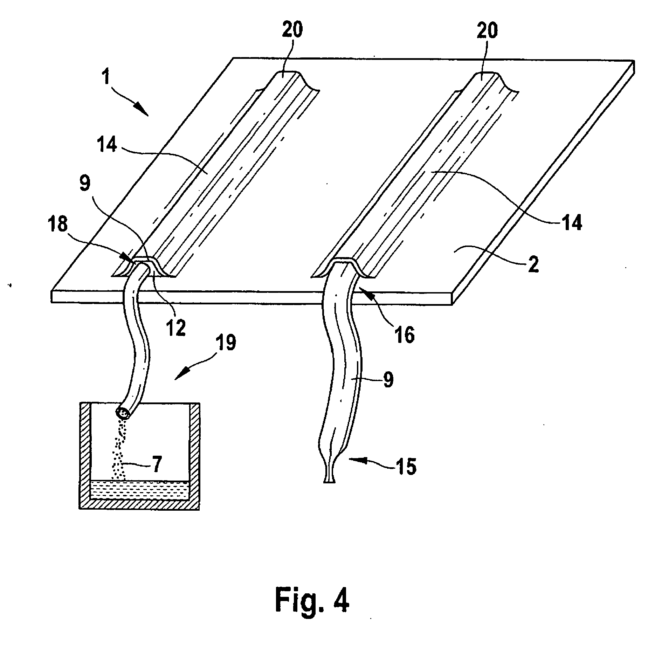

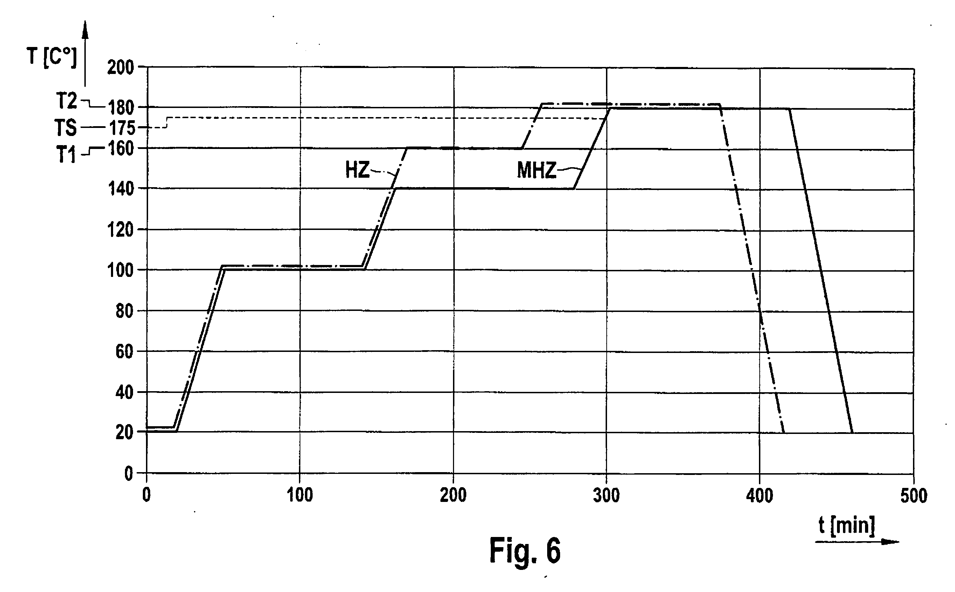

The fibre composite component 1 produced by the specific curing cycle explained further below with reference to Figure 6 is represented in Figure 4 in a perspective view during the removal of the moulding cores 4 from the mould.

After a pre-curing, which is performed at a temperature (see Figure 6) that lies below the melting temperature TS of the core material 7, for example a first temperature T1, the moulding cores 4, which include the core material 7 with a narrow melting range, are melted out at a second temperature T2, above the melting temperature TS, from the moulded portions 14 formed by them. These moulded portions 14 are in this example two Ω-shaped stringers 20 for stiffening the base component 2.

On the left-hand side of Figure 4, a collecting device 19 is connected at the end of the core sleeve 9 lying at the front, by means of a connection device 18 not represented any more specifically. For this purpose, the core sleeve 9 has previously been opened. It may, however, also already contain such a connection device 18. The other end of the core sleeve 9, on the opposite side, is closed, since it completely encloses the moulding core 4 in the way described above.

The collecting device 19 comprises, for example, a heated line and a collecting vessel for the molten core material 7. To remove the molten core material 7 from the moulded portion 14, the base component 2 can be pivoted, in order that the molten core material 7 flows out under its gravitational force. At the same time or instead of this, a pressure which brings about and/or assists the flowing out of the molten core material 7 may be applied to the moulding core 4 from the end of the moulded portion 14 lying opposite the collecting device 19.

Once the core material 7 has flowed out completely, the core sleeve 9 is drawn out from the moulded portion 14. It may also be brought out already by the pressure applied. The release layer applied to the core sleeve 9 or a moulding core 4 without a core sleeve 9 is advantageous for this process. The core sleeve 9 can consequently be drawn out from the moulded portion 14 in the longitudinal direction without any problem. This is also possible if the moulded portion 14 or the stringer 20 has undercuts in the longitudinal direction. Such removal of the core sleeve 9 or the moulding core 4 from the mould is therefore made possible. The fibre composite component 1 can then be further processed.

If reinforcing means 13 are used, they may be melted out at the same time or remain in the component, depending on the embodiment.

In a further configuration, the core sleeve 9 is formed as a flexible tube that can be closed at both its ends, as schematically shown on the right-hand side of Figure 4. A collecting device 19 is in this case not necessary, since the core sleeve 9 is formed as a flexible tube with two portions 15, 16, of which a first portion 15 is arranged outside the moulded portion 14 and a second portion 16 forms the moulding core 4 inside the moulded portion 14 with core material 7 that has been introduced and shaped in this second portion 16.

Both portions 15 and 16 of the flexible tube are designed in such a way that they respectively have at least the entire internal volume of the moulded portion 14. For this purpose, Figure 5A shows an arrangement of the fibre composite component 1 with the base component 2 and the moulded portion 14, which is formed by the second portion 16 of the flexible tube or the core sleeve 9 formed as a flexible tube. The flexible tube is closed at the left-hand end and protrudes by a certain amount out of the right-hand end of the moulded portion 14. The entire arrangement is located on a base plate 17, which serves as a working plate. The base plate 17 is extended beyond the right-hand end of the base component 2, forming a place for the first portion 15 of the flexible tube, which is folded up here.

After the pre-curing of the fibre composite component 1 specified above, the moulding core 4 is removed with the flexible tube, by the second temperature T2 melting the core material 7 in the second portion 16 of the flexible tube inside the moulded portion 14, as is shown in Figure 5B. As this happens, the base plate 17 is tilted in such a way that the molten core material 7 flows out from the second portion 16 of the flexible tube into its first portion 15 under the effect of gravitational force and/or a force applied to the other end of the flexible tube. After that, the flexible tube is drawn out from the moulded portion 14, a release layer on the tube, for example in the form of an additional sleeve, in turn assisting the operation of removing it from the mould.

After removal from the mould, this tube core is reused, in that the second portion 16 is introduced into a corresponding moulding tool 8, which can easily be imagined here for example in place of the moulded portion 14. An associated base plate 17 is tilted oppositely to the representation in Figure 5B, the first portion 15 of the flexible tube being heated to melt the core material 7 located in it, and this material flowing into the moulding tool 8. The core material 7 is closed in an airtight manner in the flexible tube, and consequently can be advantageously worked and processed without being under the effect of air and without any effect on the air. When such a moulding core 4 with a flexible tube is being created for the first time, the first or second portion of the flexible tube is filled with core material 7 and then correspondingly closed.

The curing cycle for producing the fibre composite component 1 comprises a number of stages, which are now explained with reference to Figure 6 by the example of a conventional curing cycle of a vacuum infusion process. In the case of a prepreg process, there is no infiltration stage for example.

Plotted on the x axis is the time in minutes and on the y axis the temperature T in °C.
The dash-dotted curve, denoted by HZ, represents a conventional multistage curing cycle HZ for a specific resin, in the case of which the temperature for curing the fibre composite component 1 is increased in stages, for example in an autoclave, with dwell times at certain temperatures.

The solid curve, denoted by MHZ, shows a modified curing cycle for the method according to the invention.

At a temperature of approximately 100°C, what is known as infiltration, that is to say the introduction of a matrix into the semifinished fibre product, takes place in the curing cycle; until then, the shape of the two curves HZ and MHZ is identical. The conventional curing cycle HZ subsequently proceeds at a higher temperature of approximately 160°C, and is finally increased to a stage at approximately 180°C for the final curing.

The modified curing cycle MHZ is kept at a first temperature T1, known as the pre-curing stage, which corresponds to approximately 140°C, for a specific period of time that can be fixed in advance. This period of time is primarily dependent on the matrix material used, for example the epoxy resin, and is maintained until the moulded portion 14 would remain adequately dimensionally stable even without the moulding core 4. This time can be determined experimentally with the respective materials.

After the pre-curing, the moulded portion 14 is dimensionally stable to the extent that the vacuum packing for the vacuum infusion process can be removed. Then the temperature is raised to the final temperature, namely a second temperature T2, which is approximately 180°C here. This second temperature T2 is higher than the melting temperature TS of the core material 7, in this example a plastic PA12 with a melting point/range of about 175°C, the core material 7 melting and being in a state in which it can be removed. The fibre composite component 1 thereby undergoes further, final curing. Depending on the materials used, the overall time of the modified curing cycle MHZ may be longer here than the time of the conventional curing cycle HZ.

The core material 7 preferably comprises a plastic, for example polyamide PA12. This polyamide has a maximum brief working temperature of 150°C; the melting point is at 175°C. With the addition of fillers, for example glass fibre shreds, this melting range can be further reduced. In the case of a polypropylene with a 30% glass fibre content, for example PP GF30, the temperatures are only approximately 7.0°C apart. The viscosity of the molten core material 7 falls as the temperature increases. Therefore, the melting-out operation is made easier when it is increased in the direction of the injection-moulding temperature of the respective material.

Consequently, a method for producing a fibre composite component, a corresponding moulding core and a corresponding fibre composite component that can achieve a significant reduction in material costs in comparison with the prior art with conventional materials are provided. The moulding core is completely removed, whereby the weight of the fibre composite component can be reduced in comparison with the prior art with conventional core materials that remain in it.

The invention is not restricted to the specific method represented in the figures for producing a fibre composite component for aerospace.

For example, the idea of the present invention can also be applied to fibre composite components in the sports equipment or motor sports sector.

Furthermore, the geometry of the moulding core can be modified in various ways.

Furthermore, it is also possible for a number of moulding cores to be used to form one moulding core, around which semifinished fibre products are placed. The aim of this is to create a more complex geometry by means of the multiplicity of moulding cores. Consequently, more complex fibre composite components can be produced.

The reinforcing means 13 may be arranged inside the core sleeve 9 or else outside the core sleeve 9.

The temperature during the melting out of the core material 7 may at the same time be the curing temperature of the fibre composite component 1.

In a preferred embodiment of the method for producing a fibre composite component 1, the force applied to the molten core material 7 is generated by the force of its weight and/or by a negative pressure on the first portion 15 of the flexible tube, arranged in the moulding tool 8, and/or by a positive pressure on the second portion 16 of the flexible tube.

In another preferred embodiment of the method for producing a fibre composite component 1, a matrix is introduced into the at least one semifinished fibre product 3 with the moulding core 4 and is subsequently at least partially cured under pressure and/or heat.

In another preferred embodiment of the method for producing a fibre composite component 1, when melting out the core material 7, a melt head with a suction extractor is pushed into the end of the at least one moulded portion 14, provided with the moulding core 4, for local melting and extraction by suction of the core material 7.

In another preferred embodiment of the method for producing a fibre composite component 1, the method takes the form of a hand lay-up, prepreg, transfer moulding and/or vacuum infusion process.

In a preferred embodiment of the moulding core 4, the core sleeve 9 comprises a material that is suitable for the process temperature and the process pressure, in particular a polyamide and/or a PTFE plastic.

In another preferred embodiment of the moulding core 4, the reinforcing means 13 are formed as corner profile parts of metal and/or plastic.

In another preferred embodiment of the moulding core 4, the moulding core 4 is formed such that it is Ω-shaped, trapezoidal, triangular, annular and/or wavy.

In another preferred embodiment of the moulding core 4, the core material 17 is a plastic, for example a polyamide or polypropylene.

In a preferred embodiment of the fibre composite component 1 with at least one stringer 19, in particular for aerospace, the stringer is produced by means of a moulding core 4.

In another preferred embodiment of the fibre composite component 1 with at least one stringer 19, in particular for aerospace, the stringer is produced by means of a method for producing a fibre composite component.

### List of designations

- 1: fibre composite component
- 2: base component
- 3: semifinished fibre product
- 4: moulding core
- 5: base of the moulding core
- 6: cross section of the moulding core
- 7: core material
- 8: moulding tool
- 9: core sleeve
- 10: outer side of the core sleeve
- 11: inner side of the core sleeve
- 12: opening of the core sleeve
- 13: reinforcing means
- 14: moulded portion
- 15: first tube portion
- 16: second tube portion
- 17: base plate
- 18: connection device
- 19: collecting device
- 2.0: stringer
- HZ: curing cycle
- MHZ: modified curing cycle
- T: temperature
- T1, T2: temperatures
- TS: melting temperature

## Claims

1. Method for producing a fibre composite component (1), in particular for aerospace, comprising the following method steps:
- forming a moulding core (4) from a core material (7) with a predetermined narrow melting range in a moulding tool (8) to establish an outer geometry of the moulding core (4), the core material (7) of the moulding core (4) being enclosed in a core sleeve (9), the sleeve (9) being a flexible tube that can be closed at both ends, the tube being provided with at least two tube portions (15, 16), each of which has at least the internal volume of at least one moulded portion (14) of the fibre composite component (1) to be produced, and one of the two tube portions (15, 16) being provided for receiving the moulding core (4) and the other of the two tube portions (15, 16) being provided as a reservoir for receiving molten core material (7) of the moulding core (4);
- at least partly laying at least one semifinished fibre product (3) on the moulding core (4) that is formed, for the shaping of the at least one moulded portion (14) of the fibre composite component (1) to be produced; and
- multistage exposure of at least the moulded portion (14) to heat and/or pressure to produce the fibre composite component (1), wherein the moulded portion (14) is pre-cured at a temperature below the melting temperature of the core material (7), and wherein a melting-out of the core material (7) and a curing of the fibre composit component (1) take place in parallel within one temperature step.

2. Method according to Claim 1, **characterized in that**, when forming the moulding core (4), the core material (7) to be melted is arranged in a first portion (15) of the at least two portions (15, 16) of the flexible tube and the second portion (16) of the at least two portions (15, 16) is introduced into the moulding tool (8), the molten core material (7) being brought into the first portion (15), arranged in the moulding tool (8), by means of a force applied to it.

3. Method according to at least one of the preceding claims, **characterized in that**, when forming the moulding core (4), reinforcing means are arranged in the region of transitions, to be formed with a sharp edge, of the outer geometry of the moulding core (4) to be formed.

4. Method according to at least one of the preceding claims, **characterized in that**, after the forming of the moulding core (4), a release layer, which reduces adhesive attachment of the semifinished fibre product (3) and/or a matrix to the core sleeve (9), is applied to the core sleeve (9).

5. Method according to Claim 4, **characterized in that** the release layer is applied in the form of a sleeve.

6. Method according to at least one of the preceding claims, **characterized in that**, during the at least partial laying of at least one semifinished fibre product (3), the moulding core (4) is arranged on a base component (2) comprising semifinished fibre composite products and/or is at least partially surrounded by semifinished fibre products (3) to form the at least one moulded portion (14) of the fibre composite component (1).

7. Method according to at least one of the preceding claims, **characterized in that**, in the multistage exposure to heat, pre-curing is performed in a pre-curing stage to obtain partial solidification to create adequate dimensional stability even without a moulding core (4) of the least one moulded portion (14) of the fibre composite component (1) to be produced, by applying heat at a first temperature (T1), below the melting temperature (TS) of the core material (7), in a time period that can be fixed; **in that** subsequently melting-out of the core material (7) is performed in a melting-out stage to remove the said material by applying heat at a second temperature (T2), above the melting temperature (TS) of the core material (7); and subsequently curing of the pre-cured fibre composite component (1) without the moulding core (4) is performed in a curing stage.

8. Method according to Claim 7, **characterized in that**, when melting out the core material (7), at least one collecting device (19) for leading away the molten core material (7) via a heatable line into a container is arranged such that it is connected at at least one end of the at least one moulded portion (14) to the latter or to the core sleeve (9), the molten core material (7) being removed by the force of its weight in a suitable position of the moulded portion (14) or by at least one force applied to the moulding core (4).

9. Method according to Claim 7, **characterized in that**, when melting out the core material (7), the molten core material (7) is brought into the tube portion (15, 16) of the two tube portions (15, 16) that is intended as a reservoir by the force of its weight in a suitable position of the moulded portion (14) or by at least one force applied to the moulding core (4).

10. Method according to at least one of Claims 7 to 9, **characterized in that**, after the melting out of the core material (7), the core sleeve (9) is removed from the at least partially cured moulded portion (14) of the fibre composite component (1).

11. Method according to at least one of the preceding claims, **characterized in that** the moulding core (4) is formed with at least one undercut.

12. Method according to at least one of the preceding claims, **characterized in that** a plastic, for example a polyamide or polypropylene, is used as the core material (7).

13. Moulding core (4) for producing a fibre composite component (1), in particular a stringer on a base component (2) in aerospace, comprising a core material (7) with a predetermined narrow melting range, the moulding core (4) being enclosed in a core sleeve (9), and the core sleeve (9) being a flexible tube, which has at least two tube portions (15, 16), each of which has at least the internal volume of at least one moulded portion (14) of the fibre composite component (1) to be produced, and the moulding core (4) being arranged in the second tube portion (16) of the at least two tube portions (15, 16) and the first tube portion (15) of the at least two tube portions (15, 16) being intended as a reservoir for molten core material (7), wherein the core material is a plastic, for example a polyamide or polypropylene, and wherein a melting temperature of the core material is higher than a pre-curing temperature (T1) of the moulded portion (14) and lower than a curing temperature (T2) of the moulded portion (14), wherein the pre-curing temperature (T1) is approximately 140°C, and wherein the curing temperature (T2) is approximately 180°C.

14. Moulding core (4) according to Claim 13, **characterized in that** the core sleeve (9) is provided with a release layer, which forms an outer surface of the moulding core (4).

15. Moulding core (4) according to Claim 14, **characterized in that** the release layer is applied in the form of a sleeve.

16. Moulding core (4) according to at least one of Claims 13 to 15, **characterized in that** the moulding core (4) has at least one undercut.

17. Moulding core (4) according to at least one of Claims 13 to 16, **characterized in that** reinforcing means (13) are arranged in the moulding core (4) in the region of transitions, to be formed with sharp edges, of its outer geometry.

## Patentansprüche

1. Verfahren zum Herstellen einer Faserverbundkomponente (1), insbesondere für die Luft- und Raumfahrt, das die folgenden Verfahrensschritte umfasst:
- Bilden eines Formkerns (4) aus einem Kernmaterial (7) mit einem zuvor festgelegten schmalen Schmelzbereich in einem Formwerkzeug (8), um eine Außengeometrie des Formkerns (4) herzustellen, wobei das Kernmaterial (7) des Formkerns (4) von einer Kernhülse (9) umschlossen ist, wobei die Hülse (9) eine flexible Röhre ist, die an beiden Enden geschlossen werden kann, wobei die Röhre mit mindestens zwei Röhrenabschnitten (15, 16) versehen ist, von denen jeder mindestens das innere Volumen von mindestens einem geformten Abschnitt (14) der herzustellenden Faserverbundkomponente (1) aufweist und einer der beiden Röhrenabschnitte (15, 16) dafür ausgelegt ist, den Formkern (4) aufzunehmen, und der andere der beiden Röhrenabschnitte (15, 16) dafür ausgelegt ist, als ein Reservoir für aufgenommenes schmelzflüssiges Kernmaterial (7) des Formkerns (4) zu dienen;
- Legen mindestens eines Faser-Halbfertigprodukts (3) mindestens teilweise auf den Formkern (4), der gebildet wird, zum Formen des mindestens einen geformten Abschnitts (14) der herzustellenden Faserverbundkomponente (1); und
- mehrstufiges Inkontaktbringen von mindestens dem geformten Abschnitt (14) mit Wärme und/oder Druck, um die Faserverbundkomponente (1) herzustellen, wobei der geformte Abschnitt (14) bei einer Temperatur unterhalb der Schmelztemperatur des Kernmaterials (7) vorausgehärtet wird und wobei ein Ausschmelzen des Kernmaterials (7) und ein Aushärten der Faserverbundkomponente (1) parallel innerhalb ein und desselben Temperaturschrittes stattfinden.

2. Verfahren nach Anspruch 1, **dadurch gekennzeichnet, dass**, beim Bilden des Formkerns (4), das zu schmelzende Kernmaterial (7) in einem ersten Abschnitt (15) der mindestens zwei Abschnitte (15, 16) der flexiblen Röhre angeordnet ist und der zweite Abschnitt (16) der mindestens zwei Abschnitte (15, 16) in das Formwerkzeug (8) eingeführt wird, wobei das schmelzflüssige Kernmaterial (7) in den in dem Formwerkzeug (8) angeordneten ersten Abschnitt (15) durch Aufbringen einer Kraft auf diesen eingebracht wird.

3. Verfahren nach mindestens einem der vorhergehenden Ansprüche, **dadurch gekennzeichnet, dass**, beim Bilden des Formkerns (4), Verstärkungsmittel in der Region von mit einer scharfen Kante zu bildenden Übergängen der Außengeometrie des zu bildenden Formkerns (4) angeordnet sind.

4. Verfahren nach mindestens einem der vorhergehenden Ansprüche, **dadurch gekennzeichnet, dass**, nach dem Bilden des Formkerns (4), eine Trennschicht, die ein Festkleben des Faser-Halbfertigprodukts (3) und/oder einer Matrix an der Kernhülse (9) vermindert, auf die Kernhülse (9) aufgebracht wird.

5. Verfahren nach Anspruch 4, **dadurch gekennzeichnet, dass** die Trennschicht in Form einer Hülse aufgebracht wird.

6. Verfahren nach mindestens einem der vorhergehenden Ansprüche, **dadurch gekennzeichnet, dass**, während des mindestens teilweisen Auflegens von mindestens einem Faser-Halbfertigprodukt (3), der Formkern (4) auf einer Basiskomponente (2) angeordnet wird, die halbfertige Faserverbundprodukte umfasst und/oder mindestens teilweise von Faser-Halbfertigprodukten (3) umgeben ist, um den mindestens einen geformten Abschnitt (14) der Faserverbundkomponente (1) zu bilden.

7. Verfahren nach mindestens einem der vorhergehenden Ansprüche, **dadurch gekennzeichnet, dass**, während des mehrstufigen Inkontaktbringens mit Wärme, ein Vor-Aushärten in einer Vor-Aushärtungsstufe ausgeführt wird, um eine teilweise Verfestigung herbeizuführen, um eine ausreichende Abmessungsstabilität - auch ohne Formkern (4) - des mindestens einen geformten Abschnitts (14) der Faserverbundkomponente (1) zu erreichen, indem Wärme bei einer ersten Temperatur (T1), unterhalb der Schmelztemperatur (TS) des Kernmaterials (7), in einem Zeitraum, der festgesetzt werden kann, aufgebracht wird; dass anschließend ein Ausschmelzen des Kernmaterials (7) in einer Ausschmelzstufe ausgeführt wird, um das Material durch Aufbringen von Wärme bei einer zweiten Temperatur (T2), oberhalb der Schmelztemperatur (TS) des Kernmaterials (7), zu entfernen; und anschließend ein Aushärten der vor-ausgehärteten Faserverbundkomponente (1) ohne den Formkern (4) in einer Aushärtungsstufe ausgeführt wird.

8. Verfahren nach Anspruch 7, **dadurch gekennzeichnet, dass**, beim Ausschmelzen des Kernmaterials (7), mindestens eine Auffangvorrichtung (19) zum Fortleiten des schmelzflüssigen Kernmaterials (7) über eine beheizbare Leitung in einen Behälter dergestalt angeordnet ist, dass sie an mindestens einem Ende des mindestens einen geformten Abschnitts (14) mit letzterem oder mit der Kernhülse (9) verbunden ist, wobei das schmelzflüssige Kernmaterial (7) durch die Kraft seines Gewichts in einer geeigneten Position des geformten Abschnitts (14) oder durch mindestens eine auf den Formkern (4) aufgebrachte Kraft entfernt wird.

9. Verfahren nach Anspruch 7, **dadurch gekennzeichnet, dass**, beim Ausschmelzen des Kernmaterials (7), das schmelzflüssige Kernmaterial (7) durch die Kraft seines Gewichts in einer geeigneten Position des geformten Abschnitts (14), oder durch mindestens eine auf den Formkern (4) aufgebrachte Kraft, in den Röhrenabschnitt (15, 16) der zwei Röhrenabschnitte (15, 16), der als Reservoir vorgesehen ist, eingebracht wird.

10. Verfahren nach mindestens einem der Ansprüchen 7 bis 9, **dadurch gekennzeichnet, dass**, nach dem Ausschmelzen des Kernmaterials (7), die Kernhülse (9) aus dem mindestens teilweise ausgehärteten geformten Abschnitt (14) der Faserverbundkomponente (1) entfernt wird.

11. Verfahren nach mindestens einem der vorhergehenden Ansprüche, **dadurch gekennzeichnet, dass** der Formkern (4) mit mindestens einer Unterschneidung ausgebildet wird.

12. Verfahren nach mindestens einem der vorhergehenden Ansprüche, **dadurch gekennzeichnet, dass** ein Kunststoff, zum Beispiel ein Polyamid oder Polypropylen, als das Kernmaterial (7) verwendet wird.

13. Formkern (4) zum Herstellen einer Faserverbundkomponente (1), insbesondere einer Längsversteifung auf einer Basiskomponente (2) in der Luft- und Raumfahrt, der ein Kernmaterial (7) mit einem zuvor festgelegten schmalen Schmelzbereich umfasst, wobei der Formkern (4) von einer Kernhülse (9) umgeben wird und wobei die Kernhülse (9) eine flexible Röhre ist, die mindestens zwei Röhrenabschnitte (15, 16) aufweist, von denen jeder mindestens das innere Volumen von mindestens einem geformten Abschnitt (14) der herzustellenden Faserverbundkomponente (1) hat, und wobei der Formkern (4) in dem zweiten Röhrenabschnitt (16) der mindestens zwei Röhrenabschnitte (15, 16) angeordnet ist und der erste Röhrenabschnitt (15) der mindestens zwei Röhrenabschnitte (15, 16) als ein Reservoir für schmelzflüssiges Kernmaterial (7) vorgesehen ist, wobei das Kernmaterial ein Kunststoff, zum Beispiel ein Polyamid oder Polypropylen, ist, und wobei eine Schmelztemperatur des Kernmaterials höher ist als eine Vor-Aushärtungstemperatur (T1) des geformten Abschnitts (14) und niedriger ist als eine Aushärtungstemperatur (T2) des geformten Abschnitts (14), wobei die Vor-Aushärtungstemperatur (T1) etwa 140 °C beträgt und wobei die Aushärtungstemperatur (T2) etwa 180 °C beträgt.

14. Formkern (4) nach Anspruch 13, **dadurch gekennzeichnet, dass** die Kernhülse (9) mit einer Trennschicht versehen ist, die eine Außenfläche des Formkerns (4) bildet.

15. Formkern (4) nach Anspruch 14, **dadurch gekennzeichnet, dass** die Trennschicht in Form einer Hülse aufgebracht wird.

16. Formkern (4) nach mindestens einem der Ansprüche 13 bis 15, **dadurch gekennzeichnet, dass** der Formkern (4) mindestens eine Unterschneidung hat.

17. Formkern (4) nach mindestens einem der Ansprüche 13 bis 16, **dadurch gekennzeichnet, dass** Verstärkungsmittel in dem Formkern (4) in der Region von mit scharfen Kanten zu bildenden Übergängen seiner Außengeometrie angeordnet sind.

## Revendications

1. Procédé de production d'un élément de composite fibreux (1), en particulier pour l'aérospatiale, comprenant les étapes de procédé suivantes :
- formation d'un noyau de moulage (4) à partir d'une matière noyau (7) ayant une plage de fusion étroite prédéterminée dans un outil de moulage (8) pour établir une géométrie externe du noyau de moulage (4), la matière noyau (7) du noyau de moulage (4) étant enfermée dans un manchon de noyau (9), le manchon (9) étant un tube flexible pouvant être fermé aux deux extrémités, le tube étant pourvu d'au moins deux parties de tube (15, 16), dont chacune a au moins le volume interne d'au moins une partie moulée (14) de l'élément de composite fibreux (1) devant être produit, et une des deux parties de tube (15, 16) permettant de recevoir le noyau de moulage (4) et l'autre des deux parties de tube (15, 16) se présentant comme un réservoir destiné à recevoir la matière noyau (7) fondue du noyau moulé (4) ;
- pose au moins partiellement d'au moins un produit semi-fini fibreux (3) sur le noyau de moulage (4) qui est formé, pour le façonnage d'au moins une partie moulée (14) de l'élément de composite fibreux (1) devant être produit ; et
- exposition en plusieurs stades d'au moins la partie moulée (14) à la chaleur et/ou à la pression pour produire l'élément de composite fibreux (1), dans laquelle la partie moulée (14) est pré-durcie à une température située sous la température de fusion de la matière noyau (7), et dans laquelle une fusion de la matière noyau (7) et un durcissement de l'élément de composite fibreux (1) ont lieu en parallèle dans la limite d'un cycle de température.

2. Procédé selon la revendication 1, **caractérisé par le fait que**, lors de la formation du noyau de moulage (4), la matière noyau (7) devant être fondue est disposée dans une première partie (15) d'au moins deux parties (15, 16) du tube flexible et la seconde partie (16) d'au moins deux parties (15, 16) est introduite dans l'outil de moulage (8), la matière noyau (7) fondue étant amenée dans la première partie (15), disposée dans l'outil de moulage (8), au moyen d'une force lui étant appliquée.

3. Procédé selon au moins l'une des revendications précédentes, **caractérisé par le fait que**, lors de la formation du noyau de moulage (4), des moyens de renforcement sont disposés dans la zone de transitions, devant être formés d'un bord aigu, de la géométrie externe du noyau de moulage (4) devant être formé.

4. Procédé selon au moins l'une des revendications précédentes, **caractérisé par le fait que**, après la formation du noyau de moulage (4), une couche anti-adhérente, qui réduit la fixation adhésive du produit semi-fini fibreux (3) et/ou une matrice au manchon de noyau (9), est appliquée au manchon de noyau (9).

5. Procédé selon la revendication 4, **caractérisé par le fait que** la couche anti-adhérente est appliquée sous la forme d'un manchon.

6. Procédé selon au moins l'une des revendications précédentes, **caractérisé par le fait que**, pendant la pose au moins partielle d'au moins un produit semi-fini fibreux (3), le noyau moulé (4) est disposé sur un composant de base (2) comprenant des produits composites semi-finis fibreux et/ou est au moins partiellement entouré de produits semi-finis fibreux (3) pour former au moins la partie moulée (14) de l'élément de composite fibreux (1).

7. Procédé selon au moins l'une des revendications précédentes, **caractérisé en ce que**, lors de l'exposition en plusieurs stades à la chaleur, le pré-durcissement est réalisé lors d'une étape de pré-durcissement pour obtenir une solidification partielle pour créer une stabilité dimensionnelle adéquate même sans noyau de moulage (4) d'au moins une partie moulée (14) de l'élément de composite fibreux (1) devant être produit, en appliquant de la chaleur à une première température (T1), en dessous de la température de fusion (TS) de la matière noyau (7), pendant un intervalle de temps pouvant être déterminé ; **en ce que**, ultérieurement, la fusion de la matière noyau (7) est réalisée dans une étape de fusion pour retirer ladite matière en appliquant de la chaleur à une seconde température (T2), au-dessus de la température de fusion (TS) de la matière noyau (7) ; et **en ce que**, ultérieurement, le durcissement de l'élément de composite fibreux (1) pré-durci sans le noyau de moulage (4) est réalisé lors d'une étape de durcissement.

8. Procédé selon la revendication 7, **caractérisé par le fait que**, lors de la fusion de la matière noyau (7), au moins un collecteur (19) pour évacuer la matière noyau (7) fondue par l'intermédiaire d'une conduite pouvant être chauffée dans un conteneur est disposé de telle sorte qu'il est relié au moins à une extrémité d'au moins une partie moulée (14) à cette dernière ou au manchon de noyau (9), la matière noyau (7) fondue étant retirée par la force de son poids dans une position adaptée de la partie moulée (14) ou par au moins une force appliquée au noyau de moulage (4).

9. Procédé selon la revendication 7, **caractérisé par le fait que**, lors de la fusion de la matière noyau (7), la matière noyau (7) fondue est amenée dans la partie de tube (15, 16) des deux parties de tube (15, 16) qui est prévue comme réservoir par la force de son poids dans une position adaptée de la partie moulée (14) ou par au moins une force appliquée au noyau de moulage (4).

10. Procédé selon au moins l'une des revendications 7 à 9, **caractérisé par le fait que**, après la fusion de la matière noyau (7), le manchon de noyau (9) est retiré de la partie moulée (14) au moins partiellement durcie de l'élément de composite fibreux (1).

11. Procédé selon au moins l'une des revendications précédentes, **caractérisé par le fait que** le noyau de moulage (4) est formé d'au moins une encoche.

12. Procédé selon au moins l'une des revendications précédentes, **caractérisé par le fait qu'**un plastique, par exemple un polyamide ou un polypropylène, est utilisé comme matière noyau (7).

13. Noyau de moulage (4) destiné à produire un élément de composite fibreux (1), en particulier une lisse sur un composant de base (2) dans l'aérospatiale, comprenant une matière noyau (7) ayant une plage de fusion étroite prédéterminée, le noyau de moulage (4) étant enfermé dans un manchon de noyau (9), et le manchon de noyau (9) étant un tube flexible pourvu d'au moins deux parties de tube (15, 16), dont chacune a au moins le volume interne d'au moins une partie moulée (14) de l'élément de composite fibreux (1) devant être produit, et le noyau de moulage (4) étant disposé dans la seconde partie de tube (16) d'au moins deux parties de tube (15, 16) et la première partie de tube (15) d'au moins deux parties de tube (15, 16) étant prévue comme réservoir de matière noyau fondue (7), dans lequel la matière noyau est un plastique, par exemple un polyamide ou un polypropylène, et dans lequel une température de fusion de la matière noyau est supérieure à une température de pré-durcissement (T1) de la partie moulée (14) et inférieure à une température de durcissement (T2) de la partie moulée (14), dans lequel la température de pré-durcissement (T1) est approximativement 140°C, et dans lequel la température de durcissement (T2) est approximativement 180°C.

14. Noyau de moulage (4) selon la revendication 13, **caractérisé par le fait que** le manchon de noyau (9) est pourvu d'une couche anti-adhérente, qui forme une surface extérieure du noyau de moulage (4).

15. Noyau de moulage (4) selon la revendication 14, **caractérisé par le fait que** la couche anti-adhérente est appliquée sous la forme d'un manchon.

16. Noyau de moulage (4) selon au moins l'une des revendications 13 à 15, **caractérisé par le fait que** le noyau de moulage (4) présente au moins une encoche.

17. Noyau de moulage (4) selon au moins l'une des revendications 13 à 16, **caractérisé par le fait que** des moyens de rigidification (13) sont disposés dans le noyau de moulage (4) dans la zone de transitions, devant être formés de bords aigus, de sa géométrie externe.
